# EUROPEAN PATENT SPECIFICATION

(11) **EP 3 269 642 B1**
(45) Date of publication and mention of the grant of the patent: **07.09.2022**
(21) Application number: 17180077.4
(22) Date of filing: 06.07.2017
(51) Int. Cl.: G05D 1/10, B64C 39/02, B64D 45/00, G01W 1/08, B64D 5/00

(54) **SYSTEMS AND METHODS FOR DETERMINING ATMOSPHERIC CONDITIONS DURING A FLIGHT TEST**
SYSTEME UND VERFAHREN ZUR BESTIMMUNG VON WITTERUNGSVERHÄLTNISSEN WÄHREND EINES FLUGTESTS
SYSTÈMES ET PROCÉDÉS POUR DÉTERMINER DES CONDITIONS ATMOSPHÉRIQUES PENDANT UN TEST EN VOL

(30) Priority: 11.07.2016 US 201615206660
(43) Date of publication of application: 17.01.2018
(73) Proprietor: The Boeing Company, Chicago, IL 60606-1596 (US)
(72) Inventor: BLACK JR., David James, Renton, WA 98055 (US); BLAKELY, Patrick A., Seattle, WA 98124 (US); YEELES, Christopher J., Renton, WA 98059 (US)
(74) Representative: Morrall, Jonathan Ian McLachlan

(56) References cited:
- US-A- 3 354 713
- US-A1- 2009 326 792
- US-A1- 2014 142 788
- HOLLAND G J ET AL: "The Aerosonde Robotic Aircraft: A New Paradigm for Environmental Observations", BULLETIN OF THE METEOROLOGICAL SOCIETY, AMERICAN METEOROLOGICAL SOCIETY, BOSTON, MA, US, vol. 82, no. 5, 1 May 2001 (2001-05-01), pages 889-901, XP002479517, ISSN: 0003-0007, DOI: 10.1175/1520-0477(2001)082<0889:TARAAN>2.3 .CO;2

## Description

### FIELD OF THE DISCLOSURE

Embodiments of the present disclosure generally relate to systems and methods of performing flight tests, and, more particularly, to systems and methods of determining atmospheric conditions during a flight test of an aircraft.

### BACKGROUND OF THE DISCLOSURE

During development, various aircraft are tested to determine operational characteristics, capabilities, limitations, and the like. Typically, as a prototype or test aircraft is flown, a trailing cone coupled to the aircraft via a connecting hose is extended behind the aircraft. During a test flight, the trailing cone is reeled out behind the test aircraft via the connecting hose. The tethered trailing cone may include one or more probes that are configured to detect atmospheric conditions during the test flight. The detected atmospheric conditions are analyzed to determine a particular atmospheric environment in which the test aircraft is operating.

However, the trailing cone may be susceptible to separating from the aircraft. For example, as the test aircraft is flown, air friction exerted into and on the test cone may cause the trailing cone to detach from the test aircraft. As the trailing cone separates from the aircraft, the trailing cone (and probes) fall back to land, and are therefore unable to sense atmospheric conditions surrounding the test aircraft.

Further, because the trailing cone extends behind the test aircraft, the trailing cone may be within the wake of the aircraft, which may skew or otherwise distort certain atmospheric conditions, such as static air pressure. For example, turbulence or jet wash within the wake in the aircraft may cause the detected air pressure to differ from that of the overall environment in which the test aircraft is flown. Additionally, the data provided by the probes of the trailing cone may be subject to error due to motion of the trailing cone and/or aircraft-induced turbulence during testing flight. In general, because the trailing cone is tethered to the aircraft, the trailing cone may be too close to the aircraft to accurately detect atmospheric conditions for an environment in which the aircraft is operating. Also, there may be delays between when data is received by the aircraft and when the data is sensed by the probes of the trailing cone.

US 2009/0326792 A1 states according to its abstract a system and method for determining wind profile and current icing potential information, comprising the steps of flying a plane; carrying a plurality of dropsondes on the plane; releasing the dropsondes into an atmosphere, for movement with a wind; collecting meteorology data by the dropsondes; transmitting the data from the dropsondes to the plane; transmitting the data from the plane to a remote control center; interpreting the meteorological data; and guiding the plane to a flight path with favorable winds and other favorable weather conditions. The invention also discloses an automated data management and decision support navigational system to make these navigational calculations and to correct the unmanned aircraft's flight path thus increasing the degree of autonomy of the unmanned aircraft.

US 3354713 A states according to its abstract an acousto-optical probing system producing a method of upper atmosphere testing wherein a signal source vehicle and a detector and transmitter vehicle are co-launched on a single rocket, or separately, into different trajectories of widely varying altitude. The detector-transmitter vehicle which is limited to the lower altitude is provided with a drag chute to separate it from the launch vehicle and to lower it at a slow rate relative to that of the signal source vehicle so as to receive signals produced by the latter and to transmit them to an airborne or ground metering station. The method thereby provides a detection system in the highly undisturbed environment of the test area rather than at the error-prone ground level.

US 2014/0142788 A1 states according to its abstract a system and method for aiding the accuracy of airdrop missions by performing localized weather data collection in a column of air and then subsequently storing, decimating and forwarding the data to a remote location. A first aircraft flies to the geographic location of the desired airdrop, deploys an atmospheric conditions sensing dropsonde, collects the data from the dropsonde, stores that data, then transmits that data or a decimated subset of that data either once or any number of consecutive times, to a second aircraft located at a predetermined distance from the first aircraft.

Reference is also made to G. J. Holland et al., 'The Aerosonde Robotic Aircraft: A New Paradigm for Environmental Observations', Bulletin of the American Meteorological Society, 2001, pages 889-901.

Reference is also made to G.J. Holland et al., 'The Aerosonde Robotic Aircraft: A New Paradigm for Environmental Observations', Bulletin of the American Meteorological Society, 2001, pages 889-901.

US 6 056 237 states according to its abstract an invention comprised of a sonotube-compatible unmanned aerial vehicle apparatus, hereinafter referred to as a UAV, and systems for launch and control of the UAV. The UAV is generally comprised of modular sections including a nose section, a payload section, a wing and fuel tank section, and a powerplant section. The modular sections are attached to adjacent sections by uniform lock sealing rings and related components. The present invention comprises an apparatus enabling very small, man portable, ballistically launched, autonomously or semi-autonomously controlled vehicle to be deployed with preprogrammed, communicated, or telemetry mission programming. A wide range of payload packages, including emergency supplies, sensors, and antenna assemblies, may be carried, used or deployed in flight. Man-portable operation is accomplished by the use of a launch canister apparatus. The launch canister comprises retractable launch stabilizing legs, turbine engine exhaust orifices, and various antennas. The launch canister apparatus alternatively comprises a modified type "A", "B", or "C" sonotube launch canister. The system of the invention also comprises a portable Command, Control, Communications, Computer, and Intelligence (C4I) control and sensing analysis console. The console is preferably ruggedized, waterproof, shockproof, and comprises necessary control and analysis computers, input/output devices, antennas, and related hardware and software for vehicle and mission control. A C4I console and/or launch canisters may be transported by means of a backpack adapted for man portability.

Reference is also made to J. M. Intricri et al.: 'Global Hawk dropsonde observations' from Atmos. Meas. Tech., 7, 3917-3926, 2014.

### SUMMARY OF THE DISCLOSURE

In an aspect, a test flight system is provided as defined in claim 1.

In another aspect, a test flight method is provided as defined in claim 11.

A need exists for a reliable system and method of detecting atmospheric conditions of an environment in which a test aircraft operates. A need exists for a system and method of providing accurate data regarding atmospheric conditions for a flight test environment.

With those needs in mind, certain embodiments of the present disclosure provide a test flight system that includes a test aircraft, and an atmospheric conditions-detecting vehicle (such as an unmanned aerial drone) that is separate and distinct from the test aircraft. The atmospheric conditions-detecting vehicle is configured to be deployed during a test flight of the test aircraft to detect atmospheric conditions of an environment in which the test aircraft operates during the test flight.

In at least one embodiment, the atmospheric conditions-detecting vehicle includes one or more parameter sensors that are configured to detect one or more atmospheric parameters indicative of at least one of the atmospheric conditions. The parameter sensors may include one or more of a pressure sensor configured to detect static air pressure as the one or more atmospheric parameters, a temperature sensor configured to detect air temperature as the one or more atmospheric parameters, or a humidity sensor configured to detect air humidity as the one or more atmospheric parameters. The atmospheric conditions-detecting vehicle may include at least one coupling device that connects the one or more parameter sensors to a main body of the atmospheric conditions-detecting vehicle.

In at least one embodiment, the atmospheric conditions-detecting vehicle is configured to transmit one or more atmospheric data signals regarding at least one of the atmospheric conditions to the test aircraft.

The test flight system includes a control unit. The control unit is configured to maintain a predetermined separation range between the test aircraft and the atmospheric conditions-detecting vehicle. In at least one embodiment, the predetermined separation range is one or more distances at which the test aircraft and the atmospheric conditions-detecting vehicle are subjected to approximately the same atmospheric conditions, and at which the test aircraft does not affect atmospheric conditions detected by atmospheric conditions-detecting vehicle.

The atmospheric conditions-detecting vehicle is configured to be deployed from the test aircraft during the test flight. The atmospheric conditions-detecting vehicle may be programmed to fly according to a predetermined route.

In at least one embodiment, the atmospheric conditions-detecting vehicle is controlled from the test aircraft. In at least one other embodiment, the atmospheric conditions-detecting vehicle is controlled from a location that is remote from the test aircraft and the atmospheric conditions-detecting vehicle.

The atmospheric conditions-detecting vehicle may include a position sensor that is configured to detect a current position of the atmospheric conditions-detecting vehicle. The atmospheric conditions-detecting vehicle may transmit positional data related to the current position of the atmospheric conditions-detecting vehicle to the test aircraft during the test flight.

Certain embodiments of the present disclosure provide a test flight method that includes operating a test aircraft during a test flight, deploying an atmospheric conditions-detecting vehicle that is separate and distinct from the test aircraft during the test flight, and detecting atmospheric conditions of an environment in which the test aircraft operates during the test flight with the atmospheric conditions-detecting vehicle, wherein the deploying comprises deploying the atmospheric-conditions-detecting vehicle from the test aircraft during the test flight, and wherein a control unit is configured to maintain a predetermined separation range between the test aircraft and the atmospheric-conditions-detecting vehicle.

### BRIEF DESCRIPTION OF THE DRAWINGS

Figure 1 is a schematic diagram of a test flight system, according to an embodiment of the present disclosure.
Figure 2 is a simplified diagrammatic representation of a test flight system during a test flight of a test aircraft, according to an embodiment of the present disclosure.
Figure 3 is a diagrammatic representation of a top view of an example of an atmospheric conditions-detecting vehicle, according to an embodiment of the present disclosure.
Figure 4 is a diagrammatic representation of a perspective top view of an example of a test aircraft, according to an embodiment of the present disclosure.
Figure 5 is a flow chart of a method of detecting atmospheric conditions of an environment of a test flight, according to an embodiment of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition may include additional elements not having that condition.

Certain embodiments of the present disclosure provide a deployable device (such as an unmanned aerial drone) that includes one or more parameter-detecting sensors. The deployable device is configured to be aloft at a pre-determined altitude and transmit parameter data to a monitoring computer (such as onboard a test aircraft) through wireless signals. The sensors are configured to detect one or more atmospheric parameters for an environment in which the test aircraft is operating. The atmospheric parameters include static air pressure, temperature, humidity, and the like. The deployable device may also include one or more position sensors (such as global positioning system sensors) that are configured to detect a current position of the deployable device.

The deployable device also includes a control unit that is configured to control operation of the deployable device. In at least one embodiment, the deployable device is pre-programmed and configured to automatically fly according to a predetermined route. In at least one other embodiment, the deployable device may be controlled from the test aircraft, a separate monitoring station, and/or the like. An altitude of the deployable device may be controlled to match an altitude of the test aircraft.

Certain embodiments of the present disclosure provide a system for measuring one or more atmospheric conditions (such as static air pressure) during a test flight of an aircraft. The system includes an atmospheric conditions-detecting vehicle, such as a remote controlled aircraft. A controller located on the test aircraft is configured to receive target location and altitude information from a remote control system, receive GPS (current location and altitude) information, and send signals to the aircraft flight control system to move to and maintain position at or near the target location and altitude.

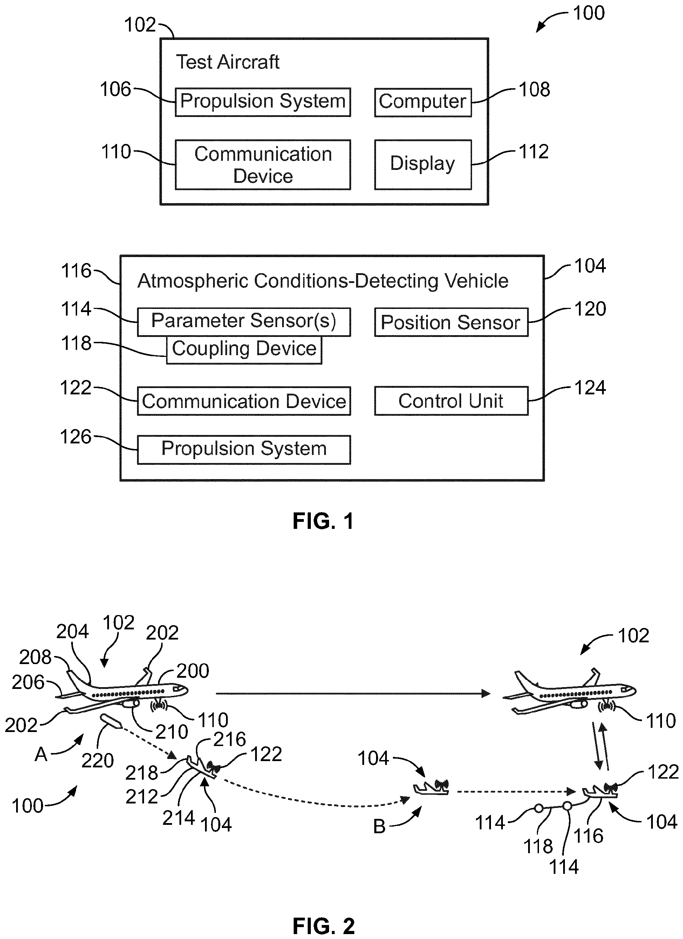

Figure 1 is a schematic diagram of a test flight system 100, according to an embodiment of the present disclosure. The test flight system 100 includes a test aircraft 102 and a deployable atmospheric conditions-detecting vehicle 104.

The test aircraft 102 may be an airplane, helicopter, and/or the like. The test aircraft 102 may include a propulsion system 106, a computer 108, a communication device 110, and a display 112. The propulsion system 106 may include one or more turbofan engines, one or more propellers, a helicopter rotor, and/or the like. The computer 108 is coupled to the communication device 110 and the display 112 through one or more wired or wireless connections. The computer 108 is an onboard computer that is configured to receive, display, and/or analyze various atmospheric conditions, such as static air pressure, humidity, temperature, and the like. The communication device 110 may be a transceiver, radio, and/or the like that is configured to transmit and receive wireless communication signals. The display 112 may be a monitor (such as a plasma or LED screen) that is in communication with the computer 108.

The atmospheric conditions-detecting vehicle 104 is separate and distinct from the test aircraft 102. That is, the atmospheric conditions-detecting vehicle 104 is an autonomous vehicle that is independently operated. During testing, the vehicle 104 is deployed and is otherwise not connected to the test aircraft 102. In at least one embodiment, the atmospheric conditions-detecting vehicle 104 is an unmanned aerial drone. For example, the atmospheric conditions-detecting vehicle 104 may be an unmanned fixed wing drone, a helicopter-type drone, and/or the like. In at least one other embodiment, the atmospheric conditions-detecting vehicle 104 is a balloon, blimp, airship, or other such dirigible.

The vehicle 104 may be deployed in a variety of ways. For example, the vehicle 104 may be stored within a storage space of the test aircraft 102 (such as within a bay, hold, or the like), and deployed when doors coupled to the storage area are opened. In at least one other embodiment, the vehicle 104 may be coupled to an underside of the test aircraft 102, such as through one or more clamps, brackets, or the like, and deployed when the coupling structures are opened, released, or the like. The vehicle 104 may be deployed in response to a deployment signal, which may be input by an operator of the test aircraft 102, a monitoring station, and/or the like. In at least one other embodiment, the vehicle 104 may be automatically deployed when the test aircraft 102 reaches a particular altitude, position, and/or the like.

The atmospheric conditions-detecting vehicle 104 is configured to be deployed during a flight test to detect one or more atmospheric conditions of an environment in which the test aircraft 102 is operating. In at least one embodiment, the atmospheric conditions-detecting vehicle 104 is deployed from the test aircraft 102. For example, the atmospheric conditions-detecting vehicle 104 may be stowed in a bay of the test aircraft 102. During a test flight, the bay is opened and the atmospheric conditions-detecting vehicle 104 is deployed from the bay. In at least one other embodiment, the atmospheric conditions-detecting vehicle 104 may be mounted to an outer portion of the test aircraft 102 and deployed therefrom during a test flight. In at least one other embodiment, the atmospheric conditions-detecting vehicle 104 is deployed from the land or sea. For example, the atmospheric conditions-detecting vehicle 104 may be deployed from a ground station, water craft (such as a ship), and/or the like.

The test flight system 100 includes one or more atmospheric conditions-detecting vehicles 104. For example, multiple atmospheric conditions-detecting vehicles 104 may be deployed during a test flight to cover the range of the test aircraft 102 during the test flight. For example, a first atmospheric conditions-detecting vehicle 104 may be deployed over a first segment of the test flight, such as a first fifty mile portion of the test flight, while a second atmospheric conditions-detecting vehicle 104 is deployed over a subsequent second segment of the test flight, such as a second fifty mile portion of the test flight, and so on.

The vehicle 104 is configured to be flown in relation to the test aircraft 102. For example, the vehicle 104 may be flown at the same altitude as the test aircraft 102 within at predetermined separation range or distance. The vehicle 104 may be flown at the same or different speed as the aircraft 102. For example, the vehicle 104 may be flown at the same speed as the test aircraft 102, at the same altitude, but at a separation distance of 500 feet behind the test aircraft 102. Optionally, the vehicle 104 may be flown at a different altitude, at a different speed, and/or along a different route than the test aircraft 102.

The atmospheric conditions-detecting vehicle 104 includes one or more parameter sensors 114 coupled to a main body 116 through a coupling device 118. The parameter sensors 114 include one or more of a static air pressure sensor (such as a barometer), a temperature sensor (such as a thermometer), a humidity sensor, and/or the like. The coupling device 118 may include a tether (such as a cable, wire, chain, rope, hose, tube, and/or the like) connected to the main body 116. As such, the parameter sensors 114 may trail behind the main body 116 of the atmospheric conditions-detecting vehicle 104. In at least one other embodiment, the coupling device 118 includes a bracket, post, strut, beam, column, fasteners, and/or the like that connect the parameter sensors 114 to the main body 116. The parameter sensors 114 may include one or more batteries, which provide operative power to the parameter sensors 114. In at least one other embodiment, the parameter sensors 114 may be powered via a main power source of the atmospheric conditions-detecting vehicle 104, such as an engine, motor, main battery, and/or the like.

The atmospheric conditions-detecting vehicle 104 may also include a position sensor 120 that is configured to detect a current position of the atmospheric conditions-detecting vehicle. For example, the position sensor 120 may be a GPS sensor or the like that is configured to determine a latitude, longitude, and altitude of the atmospheric conditions-detecting vehicle 104.

The atmospheric conditions-detecting vehicle 104 also includes a communication device 122, such as a transceiver, radio, and/or the like that is configured to transmit and/or receive wireless communication signals. The test aircraft 102 and the atmospheric conditions-detecting vehicle 104 communicate with one another via the respective communication devices 110 and 122.

A control unit 124 is communicatively coupled to the parameter sensors 114, the position sensor 120, and/or the communication device 122 through one or more wired or wireless connections. The control unit 124 is configured to control operation of the atmospheric conditions-detecting vehicle 104. For example, the control unit 124 is configured to receive atmospheric parameter data (such as data regarding temperature, static air pressure, humidity, and; or the like of an environment in which the test aircraft 102 is operating) from the parameter sensors 114 and transmit the atmospheric parameter data to the test aircraft 102 via the communication device 122. Optionally, the parameter sensors 114 may directly transmit the atmospheric parameter data to the test aircraft 102 through the communication device 114.

As shown, the control unit 124 is onboard the atmospheric conditions-detecting vehicle 104. In at least one other embodiment, the control unit 124 is onboard the test aircraft 102. In at least one other embodiment, the control unit 124 may be remotely located from the test aircraft 102 and the atmospheric conditions-detecting vehicle 104. For example, the atmospheric conditions-detecting vehicle 104 may be remotely operated from a control station, which may be onboard the test aircraft 102, another aircraft, a land-based control station, and/or a sea-based control station (such as onboard a ship).

The atmospheric conditions-detecting vehicle 104 may also include a propulsion system 126. The propulsion system 126 may include one or more propellers, helicopter-type rotors, and/or the like, for example. The control unit 124 is configured to control the propulsion system 126 to move the atmospheric conditions-detecting vehicle 104 to target locations and altitudes. The control unit 124 is communicatively coupled to the propulsion system 126 to move the atmospheric conditions-detecting vehicle 104 to target locations and altitudes during a test flight of the test aircraft 102. An operator of the atmospheric conditions-detecting vehicle 104 may be onboard the test aircraft 102, a land- or sea-based control station, another aircraft, and/or the like. In at least one other embodiment, the control unit 124 is programmed to automatically control operation of the atmospheric conditions-detecting vehicle 104 (without separate operator intervention) according to a predetermined route to provide data regarding atmospheric conditions of an environment in which the test aircraft 102 operates.

In operation, the test aircraft 102 is flown during a test flight. During the test flight, the atmospheric conditions-detecting vehicle 104 is deployed. As noted above, the atmospheric conditions-detecting vehicle 104 is separate and distinct from the test aircraft 102. The atmospheric conditions-detecting vehicle 104 is not tethered or otherwise connected to the test aircraft 102 during the test flight. The atmospheric conditions-detecting vehicle 104 may be deployed from the test aircraft 102, a land station, a sea station (such as onboard a ship), or another aircraft 102. Further, multiple atmospheric conditions-detecting vehicles 104 may be deployed at predetermined locations during the test flight to cover a full range of the test flight of the test aircraft 102.

The control unit 124 controls operation of the atmospheric conditions-detecting vehicle 104. The control unit 124 operates the propulsion system 126 to move the atmospheric conditions-detecting vehicle 104 to a desired target location, altitude, speed, and/or the like. For example, the control unit 124 may operate the propulsion system 126 to a desired altitude and control the atmospheric conditions-detecting vehicle 104 at a desired vector or route during the test flight of the test aircraft 102.

During the test flight, the parameter sensors 114 detect one or more atmospheric parameters of an environment in which the test aircraft 102 is operating. The control unit 124 may control the propulsion system 126 to maintain a desired separation range or distance between the test aircraft 102 and the atmospheric conditions-detecting vehicle 104 during the test flight. The separation range or distance is one or more distances that are short enough to ensure that the atmospheric conditions-detecting vehicle 104 and the test aircraft 102 are within a predefined similar environment (for example, both are in an environment having the same or approximately the same atmospheric conditions), while also long enough to ensure that operation of the test aircraft 102 does not affect the atmospheric conditions detected by the sensors 114 (for example, the separation distance is long enough to ensure that turbulence generated by the test aircraft 102 does not cause the position sensors 114 to detect a turbulence-induced air pressure). For example, the separation distance may be 500 feet. Optionally, the separation distance may be greater or lesser than 500 feet. For example, the separation distance may be 1, 2, 3 or more miles.

The parameter sensors 114 detect atmospheric conditions during the test flight. In at least one embodiment, the position sensors 114 include an air pressure sensor that is configured to detect static air pressure, a temperature sensor that is configured to detect air temperature, a humidity sensor that is configured to detect air humidity, and/or the like. The position sensors 114 output atmospheric data signals that are transmitted to the test aircraft 102 via the communication device 122. The position sensor 120 may also output a position data signal regarding the position (for example, latitude, longitude, and/or altitude) of the atmospheric conditions-detecting vehicle 104 that is transmitted to the test aircraft 102 via the communication device 122.

The test aircraft 102 receives the atmospheric data signals and/or the position data signal from the atmospheric conditions-detecting vehicle 104 via the communication device 110. The computer 108 may then show atmospheric conditions (based on the received atmospheric data signals) and/or a position of the atmospheric conditions-detecting vehicle 104 on the display 112. As such, an operator of the test aircraft 102 may monitor the atmospheric conditions of an environment in which the test aircraft 102 is operated. In at least one other embodiment, the atmospheric data signals and/or the position data signal may be received by a monitoring station that is separate and distinct from the test aircraft 102.

As used herein, the term "control unit," "unit," "central processing unit," "CPU," "computer," or the like may include any processor-based or microprocessor-based system including systems using microcontrollers, reduced instruction set computers (RISC), application specific integrated circuits (ASICs), logic circuits, and any other circuit or processor including hardware, software, or a combination thereof capable of executing the functions described herein. Such are exemplary only, and are thus not intended to limit in any way the definition and/or meaning of such terms. For example, the control unit 124 may be or include one or more processors that are configured to control operation of the atmospheric conditions-detecting vehicle 104.

The control unit 124 is configured to execute a set of instructions that are stored in one or more storage elements (such as one or more memories), in order to process data. For example, the control unit 124 may include or be coupled to one or more memories. The storage elements may also store data or other information as desired or needed. The storage elements may be in the form of an information source or a physical memory element within a processing machine.

The set of instructions may include various commands that instruct the control unit 124 as a processing machine to perform specific operations such as the methods and processes of the various embodiments of the subject matter described herein. The set of instructions may be in the form of a software program. The software may be in various forms such as system software or application software. Further, the software may be in the form of a collection of separate programs, a program subset within a larger program or a portion of a program. The software may also include modular programming in the form of object-oriented programming. The processing of input data by the processing machine may be in response to user commands, or in response to results of previous processing, or in response to a request made by another processing machine.

The diagrams of embodiments herein may illustrate one or more control or processing units, such as the control unit 124. It is to be understood that the processing or control units may represent circuits, circuitry, or portions thereof that may be implemented as hardware with associated instructions (e.g., software stored on a tangible and non-transitory computer readable storage medium, such as a computer hard drive, ROM, RAM, EPROM, or the like) that perform the operations described herein. The hardware may include state machine circuitry hardwired to perform the functions described herein. Optionally, the hardware may include electronic circuits that include and/or are connected to one or more logic-based devices, such as microprocessors, processors, controllers, or the like. Optionally, the control unit 124 may represent processing circuitry such as one or more of a field programmable gate array (FPGA), application specific integrated circuit (ASIC), microprocessor(s), and/or the like. The circuits in various embodiments may be configured to execute one or more algorithms to perform functions described herein. The one or more algorithms may include aspects of embodiments disclosed herein, whether or not expressly identified in a flowchart or a method.

As used herein, the terms "software" and "firmware" are interchangeable, and include any computer program stored in memory for execution by a computer, including RAM memory, ROM memory, EPROM memory, EEPROM memory, OTP (one time programmable) memory, and non-volatile RAM (NVRAM) memory. The above memory types are exemplary only, and are thus not limiting as to the types of memory usable for storage of a computer program.

Figure 2 is a simplified diagrammatic representation of the test flight system 100 during a test flight of the test aircraft 102, according to an embodiment of the present disclosure. As shown, the test aircraft 102 may be an airplane having a fuselage 200, wings 202, and a tail 204 having stabilizers 206 and 208. The propulsion system 106 may include two turbofan engines 210 secured to the wings 202.

In at least one example, the atmospheric conditions-detecting vehicle 104 may be an unmanned aerial drone 212 having a fuselage 214, wings 216, and stabilizers 218. The propulsion system 126 (not shown in Figure 2) may include one or more propellers.

The atmospheric conditions-detecting vehicle 104 may be initially secured within a retaining canister 220 that is secured to an underside of the test aircraft 102. During the test flight, the retaining canister 220 is ejected from the test aircraft 102 at location A and the atmospheric conditions-detecting vehicle 104 is deployed from the retaining canister 220.

Referring to Figures 1 and 2, during the test flight, the atmospheric conditions-detecting vehicle 104 is operated by the control unit 124 such that the atmospheric conditions-detecting vehicle 104 is moved to a desired altitude, position, speed, and/or the like. For example, the control unit 124 may operate the atmospheric conditions-detecting vehicle 104 according to a desired route, such as within a holding pattern at a desired altitude and speed at location B. The control unit 124 ensures that a desired separation distance or range is maintained between the test aircraft 102 and the atmospheric conditions-detecting vehicle 104 during the test flight.

During the test flight, the parameter sensors 114 may be deployed from the atmospheric conditions-detecting vehicle 104. For example, a plurality of parameter sensors 114 may be coupled to the main body 116 through the coupling device 118, which may include a flexible and resilient tether that securely couples to an underside of the main body 116. The tether may include a hose, tube, cable, wire, rope, and/or the like. In at least one other embodiment, the parameter sensors 114 may be rigidly secured to the main body 116 through brackets, fasteners, adhesives, beams, posts, columns, struts, fins, walls, and/or the like. In at least one other embodiment, the parameter sensors 114 may be secured within the main body 116.

The parameter sensors 114 detect various atmospheric parameters (such as air pressure, temperature, and humidity). The parameter sensors 114 output the detected atmospheric parameters as atmospheric data signals. The communication device 122 of the atmospheric conditions-detecting vehicle 104 transmits the atmospheric data signals and the position signals of the atmospheric conditions-detecting vehicle 104 to the aircraft 102, which is in communication with the atmospheric conditions-detecting vehicle 104 through the communication device 110. As such, an operator of the test aircraft is able to view atmospheric data of an environment in which the test aircraft 102 is operating.

Upon completion of the test flight, the atmospheric conditions-detecting vehicle 104 may be recovered. For example, the atmospheric conditions-detecting vehicle 104 may be landed at a known location and recovered. In at least one other embodiment, a parachute may be deployed from the atmospheric conditions-detecting vehicle 104, which may control a descent of the atmospheric conditions-detecting vehicle 104. In at least one other embodiment, the atmospheric conditions-detecting vehicle 104 may be maneuvered back into or onto the test aircraft 102. In at least one other embodiment, the atmospheric conditions-detecting vehicle 104 may be ditched and not recovered after the test flight.

The atmospheric conditions-detecting vehicle 104 may be an unmanned aerial vehicle (UAV). In at least one embodiment, the atmospheric conditions-detecting vehicle 104 is an unmanned drone that may be remotely operated from the test aircraft 102, a land station, a sea station, another aircraft, and/or the like. As shown in Figure 2, the atmospheric conditions-detecting vehicle 104 may be an unmanned drone having fixed wings and at least one propeller. In other embodiment, the atmospheric conditions-detecting vehicle 104 may include one or more helicopter-type rotors. In at least one other embodiment, the atmospheric conditions-detecting vehicle 104 may include a balloon, a burner, and an envelope, for example

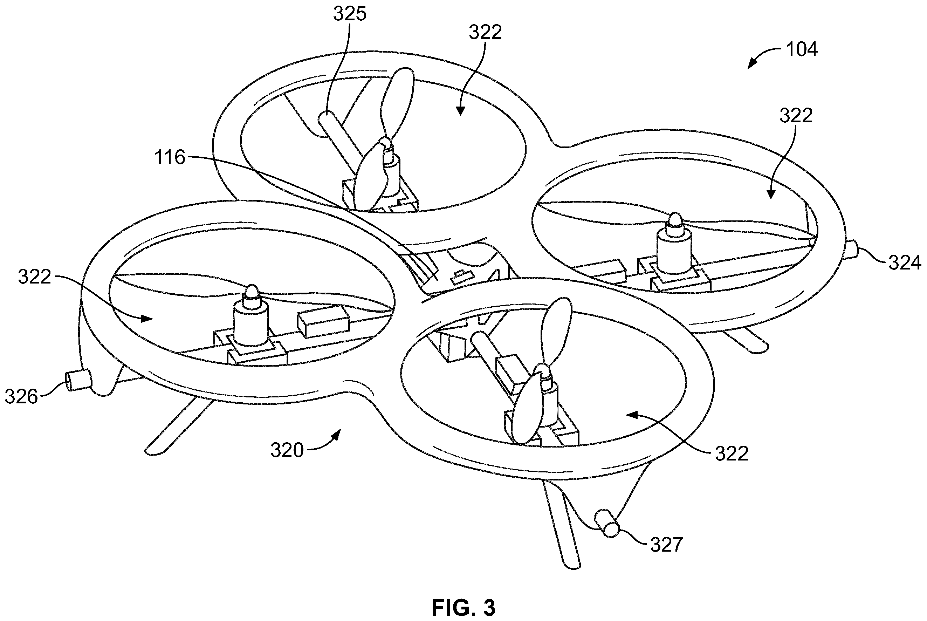

Figure 3 is a diagrammatic representation of a top view of another example of the atmospheric conditions-detecting vehicle 104, according to an embodiment of the present disclosure. As shown in Figure 3, the atmospheric conditions-detecting vehicle 104 may be a UAV that includes an airframe 320 and a plurality of propulsion systems 322 coupled to the airframe 320. In general, the airframe 320 forms the structural body or framework for the vehicle 104. In the illustrated embodiment shown in Figure 3, the vehicle 104 includes four propulsion systems 322, such that each propulsion system 322 is mounted to a respective arm 324, 325, 326, and 327. In the illustrated embodiment, the vehicle 104 includes four arms 324-327 and a single propulsion system 322 that is mounted to each respective arm 324-327. Optionally, the vehicle 104 may include more or less propulsion systems 322, more or less propulsion systems 322 per arm 324-327, and more or less arms 324-327 than shown.

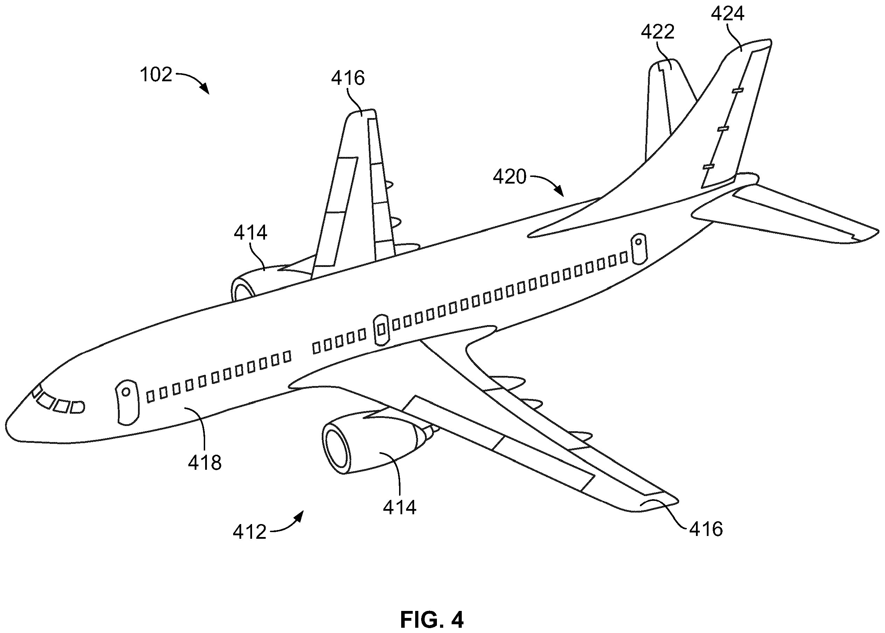

Figure 4 is a diagrammatic representation of a perspective top view of an example of the test aircraft 102, according to an embodiment of the present disclosure. The test aircraft 102 includes a propulsion system 412 that includes two turbofan engines 414, for example. Optionally, the propulsion system 412 may include more engines 414 than shown. The engines 414 are carried by wings 416 of the test aircraft 102. In other embodiments, the engines 414 may be carried by a fuselage 418 and/or an empennage 420. The empennage 420 may also support horizontal stabilizers 422 and a vertical stabilizer 424. In various other embodiments, the test aircraft 102 may be other types of aircraft, such as a helicopter, single propeller aircraft, an airship, and/or the like.

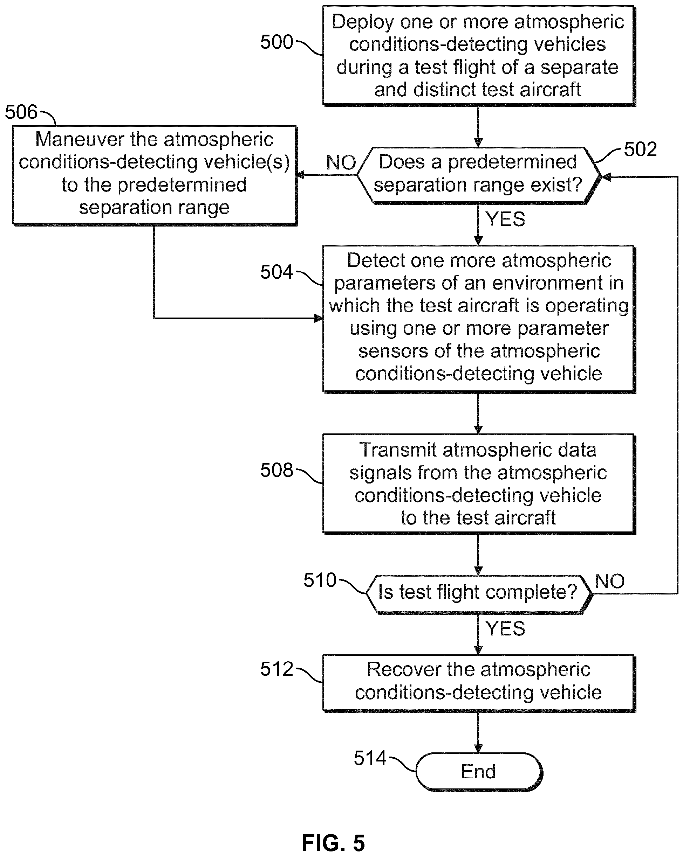

Figure 5 is a flow chart of a method of detecting atmospheric conditions of an environment of a test flight, according to an embodiment of the present disclosure. In at least one embodiment, one or more control units, such as the control unit 124 of Figure 1, are configured to operate according to the flow chart shown in Figure 5.

Referring to Figures 1 and 5, the method begins at 500, in which one or more atmospheric conditions-detecting vehicles 104 are deployed during a test flight of a separate and distinct test aircraft 102. At 502, it is determined (such as by the control unit 124) whether a predetermined separation range exists between the atmospheric conditions-detecting vehicle(s) 104 and the test aircraft 102. The relative distance between the vehicle(s) 104 and the test aircraft 102 may be determined through positional signals (such as GPS signals) of the vehicle(s) 104 and the test aircraft 102. The predetermined separation range may be one or more distances at which the test aircraft 102 and the vehicle(s) 104 are subjected to the same or approximately the same atmospheric conditions (in which a certain difference in atmospheric conditions between the locations may be within a predetermined tolerance), and at which the test aircraft 102 does not affect atmospheric conditions (beyond a negligible amount) detected by the parameters sensors 114 (for example, the sensors 114 are not affected by the wake of the test aircraft).

If the test aircraft 102 and the vehicle(s) 104 are within the predetermined separation range, the method proceeds from 502 to 504, in which the control unit 124 operates the vehicle(s) 104 to detect one or more atmospheric parameters of the environment in which the test aircraft 102 is operating, using one or more parameter sensors 114 of the atmospheric conditions-detecting vehicle(s) 104. If, however, the test aircraft 102 and the vehicle(s) 104 are not within the predetermined separation range at 502, the method proceeds from 502 to 506, in which the control unit 124 operates the vehicle(s) 104 to move them within the predetermined separation range. The method then proceeds from 506 to 502.

At 508, the control unit 124 controls the vehicle(s) 104 to transmit atmospheric data signals to the test aircraft 102. At 510, the control unit 124 determines whether the test flight is complete. If not, the method returns to 502 from 510. If, however, the test flight is complete, the method proceeds from 510 to 512, in which the vehicle(s) 104 is recovered. Alternatively, the vehicle(s) 104 may not be recovered. The method ends at 514.

As explained above, embodiments of the present disclosure provide reliable systems and methods of detecting atmospheric conditions of an environment in which a test aircraft operates. Embodiments of the present disclosure provide systems and methods of providing accurate data regarding atmospheric conditions for a flight test environment. Unlike known testing systems, embodiments of the present disclosure do not utilize a trailing cone tethered to the test aircraft, which is susceptible to disconnection, and providing data that may be distorted due to the trailing cone being in the wake of the test aircraft. Further, embodiments of the present disclosure provide real time data to an aircraft operator through wireless transmission of data to the test aircraft from the atmospheric conditions-detecting vehicle.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical (or various other angles or orientations), and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) may be used in combination with each other. In addition, many modifications may be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the appended claims.

## Claims

1. A test flight system (100), comprising:
a test aircraft (102); and
an atmospheric conditions-detecting vehicle (104) comprising a propulsion system (126), the atmospheric conditions-detecting vehicle being separate and distinct from the test aircraft (102), wherein the atmospheric conditions-detecting vehicle (104) is configured to be deployed during a test flight of the test aircraft (102) to detect atmospheric conditions of an environment in which the test aircraft (102) operates during the test flight,
wherein the atmospheric conditions-detecting vehicle (104) is configured to be deployed from the test aircraft (102) during the test flight;
wherein the test flight system further comprises a control unit (124), and wherein the control unit (124) is configured to maintain a predetermined separation range between the test aircraft (102) and the atmospheric conditions-detecting vehicle (104).

2. The test flight system (100) of claim 1, wherein the atmospheric conditions-detecting vehicle (104) comprises one or more parameter sensors (114) that are configured to detect one or more atmospheric parameters indicative of at least one of the atmospheric conditions.

3. The test flight system (100) of claim 2, wherein the one or more parameter sensors (114) comprises one or more of:
a pressure sensor configured to detect static air pressure as the one or more atmospheric parameters;
a temperature sensor configured to detect air temperature as the one or more atmospheric parameters; or
a humidity sensor configured to detect air humidity as the one or more atmospheric parameters.

4. The test flight system (100) of claim 2 or claim 3, wherein the atmospheric conditions-detecting vehicle (104) further comprises at least one coupling device (118) that connects the one or more parameter sensors (114) to a main body (116) of the atmospheric conditions-detecting vehicle (104).

5. The test flight system (100) of any of claims 1 to 4, wherein the atmospheric conditions-detecting vehicle (104) is configured to transmit one or more atmospheric data signals regarding at least one of the atmospheric conditions to the test aircraft (102).

6. The test flight system (100) of claim 5, wherein the atmospheric data signals are transmitted to the test aircraft (102) by a communication device (122) of the atmospheric conditions-detecting vehicle (104).

7. The test flight system (100) of claim 1, wherein the predetermined separation range is one or more distances at which the test aircraft (102) and the atmospheric conditions-detecting vehicle (104) are subjected to approximately the same atmospheric conditions, and at which the test aircraft (102) does not affect atmospheric conditions detected by atmospheric conditions-detecting vehicle (104).

8. The test flight system (100) of any of claims 1 to 7, wherein the atmospheric conditions-detecting vehicle (104) is programmed to fly according to a predetermined route.

9. The test flight system (100) of any of claims 1 to 8, wherein the atmospheric conditions-detecting vehicle (104) is an unmanned aerial drone.

10. The test flight system (100) of any of claims 1 to 9, wherein the atmospheric conditions-detecting vehicle (104) further comprises a position sensor (120) that is configured to detect a current position of the atmospheric conditions-detecting vehicle (104), wherein the atmospheric conditions-detecting vehicle (104) transmits positional data related to the current position of the atmospheric conditions-detecting vehicle (104) to the test aircraft (102) during the test flight.

11. A test flight method, comprising:
operating a test aircraft (102) during a test flight;
deploying an atmospheric conditions-detecting vehicle (104) comprising a propulsion system (126), the atmospheric conditions-detecting vehicle being separate and distinct from the test aircraft (102) during the test flight; and
detecting atmospheric conditions of an environment in which the test aircraft (102) operates during the test flight with the atmospheric conditions-detecting vehicle (104),
wherein the deploying comprises deploying the atmospheric conditions-detecting vehicle (104) from the test aircraft (102) during the test flight,
and wherein a control unit (124) is configured to maintain a predetermined separation range between the test aircraft (102) and the atmospheric conditions-detecting vehicle (104).

12. The test flight method of claim 11, wherein the detecting comprises using one or more parameter sensors (114) of the atmospheric conditions-detecting vehicle (104) to detect one or more atmospheric parameters indicative of at least one of the atmospheric conditions.

13. The test flight method of any of claim 12, wherein the detecting comprises connecting the one or more parameter sensors (114) to a main body (116) of the atmospheric conditions-detecting vehicle (104) with at least one coupling device (118).

14. The test flight method of any of claims 11 to 13, further comprising transmitting one or more atmospheric data signals regarding at least one of the atmospheric conditions to the test aircraft (102).

15. The test flight method of any of claims 11 to 13, wherein the predetermined separation range is one or more distances at which the test aircraft (102) and the atmospheric conditions-detecting vehicle (104) are subjected to approximately the same atmospheric conditions, and at which the test aircraft (102) does not affect atmospheric conditions detected by atmospheric conditions-detecting vehicle (104).

## Patentansprüche

1. Testflugsystem (100), das aufweist:
ein Testflugzeug (102); und
ein Wetterlageermittlungsfahrzeug (104), das ein Antriebssystem (126) aufweist, wobei das Wetterlageermittlungsfahrzeug von dem Testflugzeug (102) getrennt ist und sich davon unterscheidet, wobei das Wetterlageermittlungsfahrzeug (104) dazu konfiguriert ist, während eines Testflugs des Testflugzeugs (102) ausgebracht zu werden, um Wetterlagen einer Umgebung, in der sich das Testflugzeug (102) während des Testflugs befindet, zu ermitteln,
wobei das Wetterlageermittlungsfahrzeug (104) dazu konfiguriert ist, von dem Testflugzeug (102) während des Testflugs ausgebracht zu werden;
wobei das Testflugsystem des Weiteren eine Steuereinheit (124) aufweist, und wobei die Steuereinheit (124) dazu konfiguriert ist, einen vorgegebenen Trennungsbereich zwischen dem Testflugzeug (102) und dem Wetterlageermittlungsfahrzeug (104) aufrecht zu erhalten.

2. Testflugsystem (100) nach Anspruch 1, wobei das Wetterlageermittlungsfahrzeug (104) einen oder mehrere Parametersensoren (114) aufweist, die dazu konfiguriert sind, einen oder mehrere atmosphärische Parameter zu ermitteln, die wenigstens eine der Wetterlagen angeben.

3. Testflugsystem (100) nach Anspruch 2, wobei der eine oder die mehreren Parametersensoren (114) einen oder mehrere aufweisen von:
einem Drucksensor, der dazu konfiguriert ist, statischen Luftdruck als einen oder mehrere atmosphärische Parameter zu ermitteln;
einem Temperatursensor, der dazu konfiguriert ist, Lufttemperatur als einen oder mehrere atmosphärische Parameter zu ermitteln; oder
einen Feuchtesensor, der dazu konfiguriert ist, Luftfeuchtigkeit als einen oder mehrere atmosphärische Parameter zu ermitteln.

4. Testflugsystem (100) nach Anspruch 2 oder Anspruch 3, wobei das Wetterlageermittlungsfahrzeug (104) des Weiteren wenigstens eine Kopplungsvorrichtung (118) aufweist, die den einen oder die mehreren Parametersensoren (114) mit einem Hauptkörper (116) des Wetterlageermittlungsfahrzeugs (104) verbindet.

5. Testflugsystem (100) nach einem der Ansprüche 1 bis 4, wobei das Wetterlageermittlungsfahrzeug (104) dazu konfiguriert ist, ein oder mehrere atmosphärische Datensignale hinsichtlich wenigstens einer der Wetterlagen an das Testflugzeug (102) zu senden.

6. Testflugsystem (100) nach Anspruch 5, wobei die atmosphärischen Datensignale von einer Kommunikationsvorrichtung (122) des Wetterlageermittlungsfahrzeugs (104) an das Testflugzeug (102) gesendet werden.

7. Testflugsystem (100) nach Anspruch 1, wobei der vorgegebene Trennungsbereich ein oder mehrere Abstände sind, an denen das Testflugzeug (102) und das Wetterlageermittlungsfahrzeug (104) ungefähr denselben Wetterlagen ausgesetzt sind, und an denen das Testflugzeug (102) Wetterlagen, die von dem Wetterlageermittlungsfahrzeug (104) ermittelt werden, nicht beeinträchtigt.

8. Testflugsystem (100) nach einem der Ansprüche 1 bis 7, wobei das Wetterlageermittlungsfahrzeug (104) dazu programmiert ist, gemäß einer vorgegebenen Route zu fliegen.

9. Testflugsystem (100) nach einem der Ansprüche 1 bis 8, wobei das Wetterlageermittlungsfahrzeug (104) eine unbemannte Flugdrohne ist.

10. Testflugsystem (100) nach einem der Ansprüche 1 bis 9, wobei das Wetterlageermittlungsfahrzeug (104) des Weiteren einen Positionssensor (120) aufweist, der dazu konfiguriert ist, eine aktuelle Position des Wetterlageermittlungsfahrzeugs (104) zu ermitteln, wobei das Wetterlageermittlungsfahrzeug (104) Positionsdaten, die sich auf die aktuelle Position des Wetterlageermittlungsfahrzeugs (104) beziehen, während des Testflugs an das Testflugzeug (102) sendet.

11. Testflugverfahren, das aufweist:
Betreiben eines Testflugzeugs (102) während eines Testflugs;
Ausbringen eines Wetterlageermittlungsfahrzeugs (104), das ein Antriebssystem (126) aufweist, wobei das Wetterlageermittlungsfahrzeug während des Testflugs von dem Testflugzeug (102) getrennt ist und sich davon unterscheidet; und
Ermitteln von Wetterlagen einer Umgebung, in der sich das Testflugzeug (102) während des Testflugs befindet, mit dem Wetterlageermittlungsfahrzeug (104),
wobei das Ausbringen das Ausbringen des Wetterlageermittlungsfahrzeugs (104) von dem Testflugzeug (102) während des Testflugs aufweist,
und wobei eine Steuereinheit (124) dazu konfiguriert ist, einen vorgegebenen Trennungsbereich zwischen dem Testflugzeug (102) und dem Wetterlageermittlungsfahrzeug (104) aufrecht zu erhalten.

12. Testflugverfahren nach Anspruch 11, wobei das Ermitteln das Verwenden eines oder mehrerer Parametersensoren (114) des Wetterlageermittlungsfahrzeugs (104) aufweist, um einen oder mehrere atmosphärische Parameter zu ermitteln, die wenigstens eine der Wetterlagen angeben.

13. Testflugverfahren nach einem von Anspruch 12, wobei das Ermitteln das Verbinden des einen oder der mehreren Parametersensoren (114) mit einem Hauptkörper (116) des Wetterlageermittlungsfahrzeugs (104) mit wenigstens einer Kopplungsvorrichtung (118) aufweist.

14. Testflugverfahren nach einem der Ansprüche 11 bis 13, das des Weiteren das Senden eines oder mehrerer atmosphärischer Datensignale hinsichtlich wenigstens einer der Wetterlagen an das Testflugzeug (102) aufweist.

15. Testflugverfahren nach einem der Ansprüche 11 bis 13, wobei der vorgegebene Trennungsbereich ein oder mehrere Abstände sind, an denen das Testflugzeug (102) und das Wetterlageermittlungsfahrzeug (104) ungefähr denselben Wetterlagen ausgesetzt sind, und an denen das Testflugzeug (102) Wetterlagen, die von dem Wetterlageermittlungsfahrzeug (104) ermittelt werden, nicht beeinträchtigt.

## Revendications

1. Système de vol d'essai (100), comprenant :
un aéronef d'essai (102) ; et
un véhicule de détection de conditions atmosphériques (104) comprenant un système de propulsion (126), le véhicule de détection de conditions atmosphériques étant séparé et distinct de l'aéronef d'essai (102), dans lequel le véhicule de détection de conditions atmosphériques (104) est configuré pour être déployé pendant un vol d'essai de l'aéronef d'essai (102) afin de détecter des conditions atmosphériques d'un environnement dans lequel l'aéronef d'essai (102) fonctionne pendant le vol d'essai, dans lequel le véhicule de détection de conditions atmosphériques (104) est configuré pour être déployé à partir de l'aéronef d'essai (102) pendant le vol d'essai,
dans lequel le système de vol d'essai comprend en outre une unité de commande (124), et dans lequel l'unité de commande (124) est configurée pour maintenir une plage de séparation prédéterminée entre l'aéronef d'essai (102) et le véhicule de détection de conditions atmosphériques (104).

2. Système de vol d'essai (100) selon la revendication 1, dans lequel le véhicule de détection de conditions atmosphériques (104) comprend un ou plusieurs capteurs de paramètres (114) qui sont configurés pour détecter un ou plusieurs paramètres atmosphériques indicateurs d'au moins une des conditions atmosphériques.

3. Système de vol d'essai (100) selon la revendication 2, dans lequel l'un ou plusieurs capteurs de paramètres (114) comprend un ou plusieurs éléments parmi :
un capteur de pression configuré pour détecter une pression d'air statique comme l'un ou plusieurs paramètres atmosphériques ;
un capteur de température configuré pour détecter une température d'air comme l'un ou plusieurs paramètres atmosphériques ; ou
un capteur d'humidité configuré pour détecter une humidité de l'air comme l'un ou plusieurs paramètres atmosphériques.

4. Système de vol d'essai (100) selon la revendication 2 ou la revendication 3, dans lequel le véhicule de détection de conditions atmosphériques (104) comprend en outre au moins un moyen d'accouplement (118) qui relie l'un ou plusieurs capteurs de paramètres (114) à un corps principal (116) du véhicule de détection de conditions atmosphériques (104).

5. Système de vol d'essai (100) selon une quelconque des revendications 1 à 4, dans lequel le véhicule de détection de conditions atmosphériques (104) est configurée pour transmettre un ou plusieurs signaux de données atmosphériques concernant au moins une des conditions atmosphériques vers l'aéronef d'essai (102) .

6. Système de vol d'essai (100) selon la revendication 5, dans lequel les signaux de données atmosphériques sont transmis vers l'aéronef d'essai (102) par un moyen de communication (122) du véhicule de détection de conditions atmosphériques (104).

7. Système de vol d'essai (100) selon la revendication 1, dans lequel la plage de séparation prédéterminée est une ou plusieurs distances où l'aéronef d'essai (102) et le véhicule de détection de conditions atmosphériques (104) sont soumis approximativement aux mêmes conditions atmosphériques, et où l'aéronef d'essai (102) n'affecte pas les conditions atmosphériques détectées par le véhicule de détection de conditions atmosphériques (104).

8. Système de vol d'essai (100) selon une quelconque des revendications 1 à 7, dans lequel le véhicule de détection de conditions atmosphériques (104) est programmé pour voler selon une route prédéterminée.

9. Système de vol d'essai (100) selon une quelconque des revendications 1 à 8, dans lequel le véhicule de détection de conditions atmosphériques (104) est un drone aérien sans pilote.

10. Système de vol d'essai (100) selon une quelconque des revendications 1 à 9, dans lequel le véhicule de détection de conditions atmosphériques (104) comprend en outre un capteur de position (120) qui est configuré pour détecter une position actuelle du véhicule de détection de conditions atmosphériques (104), dans lequel le véhicule de détection de conditions atmosphériques (104) transmet des données de position relatives à la position actuelle du véhicule de détection de conditions atmosphériques (104) vers l'aéronef d'essai (102) pendant le vol d'essai.

11. Procédé de vol d'essai, comprenant :
le fonctionnement d'un aéronef d'essai (102) pendant un vol d'essai ;
le déploiement d'un véhicule de détection de conditions atmosphériques (104) comprenant un système de propulsion (126), le véhicule de détection de conditions atmosphériques (104) étant séparé et distinct de l'aéronef d'essai (102) pendant le vol d'essai ; et
la détection de conditions atmosphériques d'un environnement dans lequel l'aéronef d'essai (102) fonctionne pendant le vol d'essai avec le véhicule de détection de conditions atmosphériques (104), dans lequel le déploiement comprend le déploiement du véhicule de détection de conditions atmosphériques (104) à partir de l'aéronef d'essai (102) pendant le vol d'essai,
et dans lequel une unité de commande (124) est configurée pour maintenir une plage de séparation prédéterminée entre l'aéronef d'essai (102) et le véhicule de détection de conditions atmosphériques (104)

12. Procédé de vol d'essai selon la revendication 11, dans lequel la détection comprend l'utilisation d'un ou plusieurs capteurs de paramètres (114) du véhicule de détection de conditions atmosphériques (104) afin de détecter un ou plusieurs paramètres atmosphériques indicateurs d'au moins une des conditions atmosphériques.

13. Procédé de vol d'essai selon une quelconque revendication 12, dans lequel la détection comprend la liaison de l'un ou plusieurs capteurs de paramètres (114) avec un corps principal (116) du véhicule de détection de conditions atmosphériques (104) avec au moins un moyen d'accouplement (118).

14. Procédé de vol d'essai selon une quelconque des revendications 11 à 13, comprenant en outre la transmission d'un ou plusieurs signaux de données atmosphériques concernant au moins une des conditions atmosphériques vers l'aéronef d'essai (102) .

15. Procédé de vol d'essai selon une quelconque des revendications 11 à 13, dans lequel la plage de séparation prédéterminée est une ou plusieurs distances où l'aéronef d'essai (102) et le véhicule de détection de conditions atmosphériques (104) sont soumises approximativement aux mêmes conditions atmosphériques, et où l'aéronef d'essai (102) n'affecte pas les conditions atmosphériques détectées par le véhicule de détection de conditions atmosphériques (104).
